# EUROPÄISCHE PATENTANMELDUNG

(11) **EP 4 765 619 A1**
(43) Veröffentlichungstag der Anmeldung: **24.06.2026**
(21) Anmeldenummer: 24221427.8
(22) Anmeldetag: 19.12.2024
(51) Int. Cl.: H02P 3/04, B25J 9/16, B25J 19/00

(54) **VERFAHREN ZUR BREMSENAUFFRISCHUNG FÜR EINE REIBUNGSBREMSE EINES ANTRIEBSSYSTEMS MIT ELEKTRONISCH KOMMUTIERTEM ELEKTROMOTOR MIT INTEGRIERTER STEUERUNG**

(71) Anmelder: maxon international ag, 6072 Sachseln (CH)
(72) Erfinder: Haas, Reto, 6072 Sachseln (CH); Berger, Roman, 6372 Ennetmoos (CH)
(74) Vertreter: Grünecker Patent- und Rechtsanwälte PartG mbB

(57) **Zusammenfassung**

Die vorliegende Erfindung betrifft ein Verfahren zur Bremsenauffrischung einer Reibungsbremse eines Antriebssystems mit einem elektronisch kommutierten Elektromotor, der einen Rotor und einen Stator umfasst, wobei die Reibungsbremse zur Bremsung des Rotors mit dem Rotor gekoppelt ist, wobei das Verfahren eine Bremsenauffrischung der Reibungsbremse und ein Testen der Bremsfunktion der Reibungsbremse zur Ermittlung einer momentanen Bremskraft der Reibungsbremse umfasst, wobei die Bremsenauffrischung und das Testen durch eine Steuerung des Antriebssystems gesteuert werden, die zur Steuerung und Regelung der Bewegung des Rotors und der Reibungsbremse eingerichtet ist. Erfindungsgemäß ist vorgesehen, dass der elektronisch kommutierte Elektromotor die Steuerung als eine integrierte Steuerung umfasst und die Bremsenauffrischung und das Testen der Bremsfunktion zusammen in einem regelmäßigen Abstand ausgeführt werden, wobei das Testen nach der Bremsenauffrischung durchgeführt wird, um zu verifizieren, dass die momentane Bremskraft über einer vorgegebenen minimalen Bremskraft liegt.

## Beschreibung

Die vorliegende Erfindung bezieht sich auf ein Verfahren zur Bremsenauffrischung einer Reibungsbremse eines Antriebssystems mit einem elektronisch kommutierten Elektromotor, der einen Rotor und einen Stator umfasst, wobei die Reibungsbremse zur Bremsung des Rotors mit dem Rotor gekoppelt ist, gemäß dem Oberbegriff des Anspruchs 1.

Ein gattungsgemäßes Verfahren umfasst eine Bremsenauffrischung der Reibungsbremse und ein Testen der Bremsfunktion der Reibungsbremse zur Ermittlung einer momentanen Bremskraft der Reibungsbremse, wobei die Bremsenauffrischung und das Testen durch eine Steuerung des Antriebssystems gesteuert werden, die zur Steuerung und Regelung der Bewegung des Rotors und der Reibungsbremse eingerichtet ist.

Derartige Verfahren können notwendig sein, da abhängig von den Betriebsbedingungen und dem Alter der Reibungsbremse die Bremswirkung beeinträchtigt werden kann. Durch die Bremsenauffrischung kann dann die Bremswirkung, beispielsweise durch Entfernen von Belägen oder Verunreinigungen auf einer Reiboberfläche der Reibungsbremse, wieder erhöht werden.

Derartige Verfahren sind im Stand der Technik bekannt. Als Steuerung werden hierfür beispielsweise industrielle Antriebsregler verwendet, die dann über Signalleitungen mit dem elektronisch kommutierten Elektromotor und der Reibungsbremse gekoppelt werden und diese steuern und regeln. Die entsprechenden für das gattungsgemäße Verfahren eingerichteten Antriebssysteme benötigen dabei relativ viel Bauraum in den etwaigen Systemen, in denen das jeweilige Antriebssystem integriert ist.

Daneben ist der Automatisierungsgrad der bekannten Verfahren gering.

Es ist Aufgabe der vorliegenden Erfindung, ein verbessertes Verfahren der gattungsgemäßen Art anzugeben, das die oben genannten Probleme löst.

Die Aufgabe wird durch die Merkmale des unabhängigen Anspruchs 1 gelöst. Demnach liegt eine erfindungsgemäße Lösung der Aufgabe vor, wenn der elektronisch kommutierte Elektromotor die Steuerung als eine integrierte Steuerung umfasst und wenn die Bremsenauffrischung und das Testen der Bremsfunktion zusammen in einem regelmäßigen Abstand ausgeführt werden, wobei das Testen nach der Bremsenauffrischung durchgeführt wird, um zu verifizieren, dass die momentane Bremskraft nach der Bremsenauffrischung über einer vorgegebenen minimalen Bremskraft liegt.

Das der elektronisch kommutierte Elektromotor eine integrierte Steuerung umfasst, bedeutet erfindungsgemäß, dass die integrierte Steuerung in dem elektronisch kommutierten Elektromotor fest verbaut oder fest mit diesem verbunden ist und somit Teil des Elektromotors ist. Beispielsweise kann die integrierte Steuerung im Elektromotorgehäuse oder in einem zusätzlichen am Elektromotorgehäuse anliegenden und mit diesem fest verbundenen Gehäuse angeordnet sein. Dadurch erzeugt der Elektromotor nicht nur die mechanische Bewegung, sondern übernimmt auch die Steuerung und Regelung dieser Bewegung. Daneben ist diese integrierte Steuerung erfindungsgemäß zur Steuerung des erfindungsgemäßen Verfahrens eingerichtet.

Eine Bremsenauffrischung der Reibungsbremse umfasst erfindungsgemäß zumindest ein definiertes Schließen der Reibungsbremse, während der Rotor angetrieben wird, wodurch Beläge oder Verunreinigungen auf der Reiboberfläche entfernt werden. Das Verfahren wird dabei außerhalb eines Normalbetriebs des Antriebssystems durchgeführt.

Indem die Steuerung als integrierte Steuerung des elektronisch kommutierten Elektromotors ausgebildet ist, ist das erfindungsgemäße Verfahren für sehr kompakte Antriebssysteme geeignet.

Daneben kann das Verfahren durch das regelmäßige Durchführen der Bremsenauffrischung und des Testens der Bremsfunktion automatisierter durchgeführt werden. Beispielsweise kann das Verfahren automatisch außerhalb eines Normalbetriebs des Antriebssystems durchgeführt werden.

Vorteilhafte Ausgestaltungen der vorliegenden Erfindung sind Gegenstand der Unteransprüche.

In einer bevorzugten Ausführungsform der vorliegenden Erfindung ist die Reibungsbremse eine Haltebremse. Haltebremsen benötigen aufgrund der geringeren Anzahl von reibenden Bremsvorgängen häufiger eine Bremsenauffrischung. Das Verfahren zur Bremsenauffrischung der Reibungsbremse ist damit für eine Haltebremse als Reibungsbremse vorteilhaft.

In einer weiteren bevorzugten Ausführungsform der vorliegenden Erfindung ist der regelmäßige Abstand ein zeitlicher Abstand, wobei der zeitliche Abstand vorzugsweise zwischen eins und sechs Wochen, besonders vorzugsweise zwischen drei und fünf, weitervorzugsweise bei vier Wochen, liegt. Überaschenderweise hat sich gezeigt, dass sich derartige regelmäßige zeitliche Abstände besonders für das Verfahren zur Bremsenauffrischung eignen.

In einer weiteren bevorzugten Ausführungsform der vorliegenden Erfindung liegt die vorgegebene minimale Bremskraft bei 40 bis 90%, vorzugsweise bei 50 bis 75%, weitervorzugsweise bei 60% einer nominalen Bremskraft der Reibungsbremse. Die nominale Bremskraft der Reibungsbremse ist die Bremskraft einer neuen, funktional einwandfreien Reibungsbremse bei dem Testen der Reibungsbremse.

In einer weiteren bevorzugten Ausführungsform der vorliegenden Erfindung umfasst die Bremsenauffrischung eine Sequenz zur Bremsenauffrischung, die folgende Schritte umfasst:
a1. Deaktivierung der Reibungsbremse und Beschleunigung des Rotors auf eine vorgegebene Rotationsgeschwindigkeit,
b1. Aktivierung der Reibungsbremse mittels eines Bremsvorgangs unter Aufrechterhaltung der Rotation bei Aufbringung eines ersten vorgegebenen Drehmoments,
c1. Messung einer Bremsreibungsstrecke und Vergleich der Bremsreibungsstrecke mit einer vorgegebenen minimalen Bremsreibungsstrecke,
wobei die Schritte a1. bis c1. solange wiederholt werden, bis oder eine vorgegebene maximale Anzahl an Durchläufen erreicht ist, bei welchen die Bremsreibungsstrecke grösser als die vorgegebene minimale Bremsreibungsstrecke ist. Die Sequenz zur Bremsenauffrischung ermöglicht eine effiziente Möglichkeit zum Entfernen von Belägen oder Verunreinigungen auf der Reiboberfläche der Reibungsbremse. Die Bremsreibungsstrecke kann beispielsweise als Drehwinkel des Rotors zwischen einem Startzeitpunkt des Bremsvorgangs und einem Endzeitpunkt des Bremsvorgangs gemessen werden. Durch die Vorgabe einer minimalen Bremsreibungsstrecke kann sichergestellt werden, dass etwaige Beläge oder Verunreinigungen auf der Reiboberfläche der Reibungsbremse ausreichend entfernt werden.

Vorzugsweise ist die vorgegebene Rotationsgeschwindigkeit kleiner oder gleich 1500 U/min, weitervorzugsweise kleiner oder gleich 500 U/min. Derartige vorgegebene Rotationsgeschwindigkeiten haben sich überraschenderweise als vorteilhaft ergeben.

Vorzugsweise ist die vorgegebene maximale Anzahl an Durchläufen, bei welchen die Bremsreibungsstrecke grösser der vorgegebenen minimalen Bremsreibungsstrecke ist, drei bis zehn, weitervorzugsweise vier bis sechs, besonders bevorzugt fünf. Die Zeitspanne eines Durchlaufes ist vorzugsweise kleiner 0,7 s, besonders bevorzugt kleiner 0,5 s.

In einer weiteren bevorzugten Ausführungsform der vorliegenden Erfindung umfasst das Testen der Bremsfunktion eine Sequenz zum Testen der Bremsfunktion, die folgende Schritte umfasst:
a2. Aktivierung der Reibungsbremse,
b2. Aufbringen eines zweiten vorgegebenen Drehmoments auf den Rotor für eine vorgegebene Zeitspanne,
c2. Messung einer Rotationstrecke des Rotors und Vergleich der Rotationstrecke mit einer vorgegebenen Rotationsstrecke, die der Rotationsstrecke bei der vorgegebenen minimalen Bremskraft entspricht.

Die Sequenz zum Testen der Bremsfunktion ist eine effiziente Möglichkeit der Verifikation der Bremsfunktion, um damit zu bestimmen, ob eine Bremsenauffrischung erfolgreich war oder eine zusätzliche Bremsenauffrischung benötigt wird. Die Rotationsstrecke kann beispielsweise als Drehwinkel des Rotors zwischen einer Position vor Schritt b2. und nach Schritt b2. gemessen werden.

In einer besonders bevorzugten Ausführung ist die Rotationsstrecke, welche der vorgegebenen minimalen Bremskraft entspricht, gleich null oder nahezu null. In diesem Fall ist der Test erfolgreich, wenn die Bremse den Rotor bei minimaler Bremskraft festhält. Sofern die minimale Bremskraft nicht ausreicht, um den Rotor festzuhalten, tritt eine Rotation auf und eine Rotationsstrecke wird gemessen. In diesem Fall ist der Test nicht erfolgreich.

Vorzugsweise beträgt die vorgegebene Zeitspanne fünf bis fünfzehn Sekunden.

Ebenfalls vorzugsweise wird Schritt b2. abgebrochen, falls die Rotationsstrecke die vorgegebene Rotationsstrecke während der vorgegebenen Zeitspanne überschreitet. Dadurch kann ein übermäßiges Drehen des Rotors bei einer unzureichenden Bremskraft der Reibungsbremse verhindert werden.

In einer bevorzugten Ausführungsform der vorliegenden Erfindung werden die Bremsenauffrischung und das Testen solange wiederholt, bis die momentane Bremskraft oberhalb der vorgegebenen Bremskraft bei dem Testen liegt oder eine maximale Anzahl an Wiederholungen des gesamten Verfahrens der Bremsenauffrischung erreicht wird, wobei die maximale Anzahl an Wiederholungen vorzugsweise bei fünf und besonders bevorzugt bei drei liegt. Dadurch kann eine Automatisierung des Verfahrens zur Bremsenauffrischung verbessert werden.

Die Erfindung stellt daneben ein Antriebssystem mit einer Reibungsbremse und einem elektronisch kommutierten Elektromotor dar, der einen Rotor, einen Stator und eine integrierte Steuerung umfasst, wobei die Reibungsbremse zur Bremsung des Rotors mit dem Rotor gekoppelt ist, wobei das Antriebssystem zur Ausführung des Verfahrens zur Bremsenauffrischung gemäß einer der oberhalb beschriebenen Ausführungsformen eingerichtet ist.

In einem bevorzugten Ausführungsbeispiel des Antriebssystems sind der Rotor, der Stator und die integrierte Steuerung in einem gemeinsamen Gehäuse angeordnet. Dadurch kann die Integration des Antriebssystems in das anzutreibende System vereinfacht werden.

In einem weiteren bevorzugten Ausführungsbeispiel des Antriebssystems ist die integrierte Steuerung innerhalb eines Bereichs angeordnet, der eine maximale Ausdehnung ausgehend von einem axialen Ende des Elektromotors, welcher Rotor und Stator umfasst, die maximal einem 2,5-fachen, vorzugsweise eines 2-fachen, einer axialen Länge des Elektromotors beträgt.

In einer alternativen Ausführung ist die integrierte Steuerung innerhalb eines Bereichs angeordnet, der eine maximale Ausdehnung ausgehend von einer äußeren Mantelfläche des Elektromotors aufweist, die maximal einem 2-fachen, vorzugsweise eines 1,5-fachen, eines Abstands des Radius der äußeren Mantelfläche des Elektromotors beträgt. Auf diese Weise ergibt sich ein besonders kompakter elektronisch kommutierter Elektromotor.

In einer weiteren bevorzugten Ausführung umfasst das Antriebssystem zusätzlich ein Getriebe.

Ferner umfasst die Erfindung eine Verwendung des Antriebssystems gemäß einem der zuvor beschriebenen Ausführungsbeispiele als Radantrieb. Da der Bauraum und die Zugänglichkeit bei Radantrieben oftmals sehr begrenzt sind, eignet sich das erfindungsgemäße Antriebssystem besonders zur Verwendung als Radantrieb.

Bevorzugt umfasst die Erfindung eine Verwendung des Antriebssystems gemäß einem der zuvor beschrieben Ausführungsbeispiele als Antrieb für Anwendungen mit vertikaler Bewegungsrichtung, insbesondere Hubantriebe für oder entlang einer Vertikalachse. Bei Antrieben für oder entlang von Vertikalachsen, welche eine vertikale schwerkraftbelastete Bewegungsrichtung aufweisen und daher eine Haltebremse benötigen, ist die Verwendung des erfindungsgemäßen Antriebssystems besonders vorteilhaft. Das Antriebssystem kann hierbei als Rad- oder Zahnradantrieb ausgeführt sein.

Daneben umfasst die Erfindung eine Verwendung des Antriebssystems gemäß einem der zuvor beschriebenen Ausführungsbeispiele als Gelenkantrieb in der Robotik. Da der Bauraum und die Zugänglichkeit bei Gelenkantrieben in der Robotik oftmals sehr begrenzt sind, eignet sich das Antriebssystem besonders zur Verwendung als Gelenkantrieb in der Robotik.

Nachfolgend wird eine Ausführungsform des erfindungsgemäßen Verfahrens und ein Ausführungsbeispiel eines erfindungsgemäßen Antriebssystems anhand von Zeichnungen näher erläutert.

In den Zeichnungen zeigen:
- Figur 1: ein Schema einer Ausführungsform des erfindungsgemäßen Verfahrens zur Bremsenauffrischung,
- Figur 2: ein Schema der Sequenz zur Bremsenauffrischung,
- Figur 3: ein Schema der Sequenz zum Testen der Bremsfunktion, und
- Figur 4: eine schematische Skizze eines Ausführungsbeispiels eines erfindungsgemäßen Antriebssystems, dass zur Ausführung der Ausführungsform des erfindungsgemäßen Verfahrens zur Bremsenauffrischung eingerichtet ist.
- Figur 5: eine schematische Skizze eines zweiten Ausführungsbeispiels eines erfindungsgemäßen Antriebssystems, dass zur Ausführung der Ausführungsform des erfindungsgemäßen Verfahrens zur Bremsenauffrischung eingerichtet ist.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

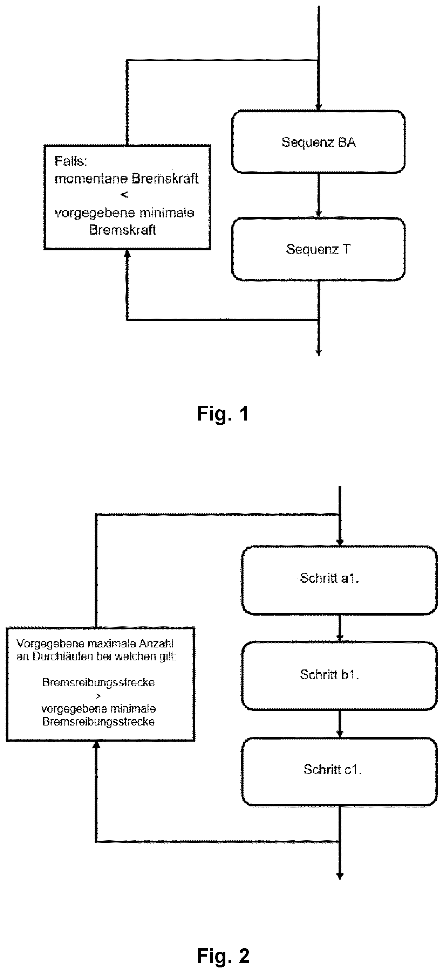

Figur 1 zeigt ein Schema einer Ausführungsform eines erfindungsgemäßen Verfahrens zur Bremsenauffrischung einer Reibungsbremse 5 eines Antriebssystems 1 mit einem elektronisch kommutierten Elektromotor 2, der einen Rotor und einen Stator umfasst, wobei die Reibungsbremse 5 zur Bremsung des Rotors mit dem Rotor gekoppelt ist. Das Verfahren umfasst eine Bremsenauffrischung der Reibungsbremse, die eine Sequenz zur Bremsenauffrischung BA umfasst und ein Testen der Bremsfunktion der Reibungsbremse, das eine Sequenz zum Testen der Bremsfunktion T umfasst, zur Ermittlung einer momentanen Bremskraft der Reibungsbremse. Das Testen und die Bremsenauffrischung werden durch eine Steuerung des Antriebssystems gesteuert, die zur Steuerung und Regelung der Bewegung des Rotors und der Reibungsbremse eingerichtet ist. Dabei ist vorgesehen, dass der elektronisch kommutierte Elektromotor 2 die Steuerung als eine integrierte Steuerung 4 umfasst. Weiter wird die Bremsenauffrischung und das Testen in einem regelmäßigen Abstand automatisiert ausgeführt. Die Bremsauffrischung kann beispielsweise in einem gewissen zeitlichen Abstand zur letzten Bremsauffrischung erfolgen. Die Bremsauffrischung kann auch beispielsweise nach einer gewissen Anzahl Bremszyklen oder nach Feststellung einer verminderten Bremswirkung bspw. nach Unterschreitung einer minimalen Bremskraft erfolgen. Entsprechend wird das in Figur 1 gezeigte Schema der Ausführungsform des Verfahrens nach dem regelmäßigen zeitlichen Abstand erneut ausgeführt. Dabei wird das Testen mit der Sequenz zum Testen T nach der Bremsenauffrischung mit der Sequenz zur Bremsenauffrischung BA durchgeführt, um zu verifizieren, dass die momentane Bremskraft über einer vorgegebenen minimalen Bremskraft liegt. Wie in Figur 1 gezeigt, wird die Bremsenauffrischung und das Testen solange wiederholt wird, bis die momentane Bremskraft oberhalb der vorgegebenen Bremskraft bei dem Testen liegt oder eine maximale Anzahl an Wiederholungen der Bremsenauffrischung erreicht wird, wobei die maximale Anzahl an Wiederholungen vorzugsweise bei 3 liegt.

Figur 2 zeigt ein Schema der Sequenz zur Bremsenauffrischung BA. Die Sequenz zur Bremsenauffrischung BA umfasst hierbei die Schritte:
a1. Deaktivierung der Reibungsbremse 5 und Beschleunigung des Rotors auf eine vorgegebene Rotationsgeschwindigkeit,
b1. Aktivierung der Reibungsbremse 5 mittels eines Bremsvorgangs unter Aufrechterhaltung der Rotation bei Aufbringung eines ersten vorgegebenen Drehmoments,
c1. Messung einer Bremsreibungsstrecke und Vergleich der Bremsreibungsstrecke mit einer vorgegebenen minimalen Bremsreibungsstrecke,
wobei die Schritte a1. bis c1. solange wiederholt werden, bis eine vorgegebene maximale Anzahl an Durchläufen erreicht ist, bei welchen die Bremsreibungsstrecke grösser als die vorgegebene minimale Bremsreibungsstrecke ist. Die Bremsreibungsstrecke kann beispielsweise als Drehwinkel des Rotors zwischen einem Startzeitpunkt des Bremsvorgangs und einem Endzeitpunkt des Bremsvorgangs gemessen werden. Durch die Vorgabe einer minimalen Bremsreibungsstrecke wird sichergestellt, dass etwaige Beläge oder Verunreinigungen auf der Reiboberfläche der Reibungsbremse ausreichend entfernt werden. Dabei ist gemäß dieser Ausführungsform die vorgegebene Rotationsgeschwindigkeit kleiner 1500 U/min und die vorgegebene maximale Anzahl an Durchläufen, bei welchen die Bremsreibungsstrecke grösser der vorgegebenen minimalen Bremsreibungsstrecke ist, beträgt 4 bis 6. Die Zeitspanne eines Durchlaufes ist kleiner 0,5 s.

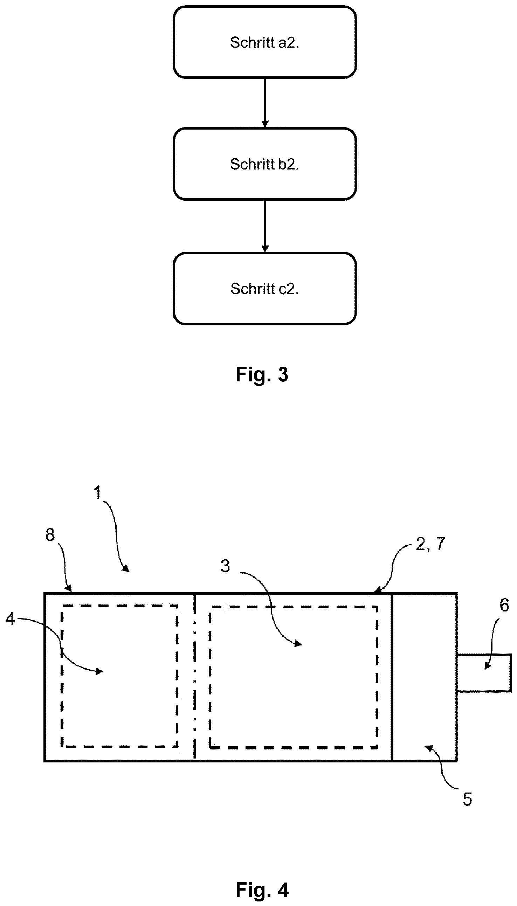

Figur 3 zeigt ein Schema der Sequenz zum Testen der Bremsfunktion T der Reibungsbremse 5.

Die Sequenz zum Testen der Bremsfunktion T umfasst hierbei folgende Schritte:
a2. Aktivierung der Reibungsbremse 5,
b2. Aufbringen eines zweiten vorgegebenen Drehmoments auf den Rotor für eine vorgegebene Zeitspanne,
c2. Messung einer Rotationstrecke des Rotors und Vergleich der Rotationstrecke mit einer vorgegebenen Rotationsstrecke, die der Rotationsstrecke bei der vorgegebenen minimalen Bremskraft entspricht.

Dadurch kann durch das Testen der Bremsfunktion durch die Sequenz zum Testen T auf effiziente Weise bestimmt werden, ob die Reibungsbremse eine Bremsenauffrischung benötigt oder eine Bremsenauffrischung erfolgreich war, da ermittelt wird, ob die momentane Bremskraft unter oder oberhalb der vorgegebenen minimalen Bremskraft liegt. Die vorgegebene minimale Bremskraft liegt gemäß der Ausführungsform bei 60% einer nominalen Bremskraft der Reibungsbremse. Bevorzugt tritt nur bei Unterschreitung einer vorgegebenen minimalen Bremskraft eine Rotation des Rotors auf und es wird eine Rotationsstrecke gemessen, so dass durch einfache Feststellung einer Rotation und entsprechender Messung einer Rotationstrecke entschieden werden kann, ober der Test erfolgreich war oder nicht. Der Test ist erfolgreich, wenn die Bremse bei vorgegebener minimaler Bremskraft den Rotor im Wesentlichen festhält und entsprechend keine oder eine sehr geringe Rotationstrecke gemessen wird.

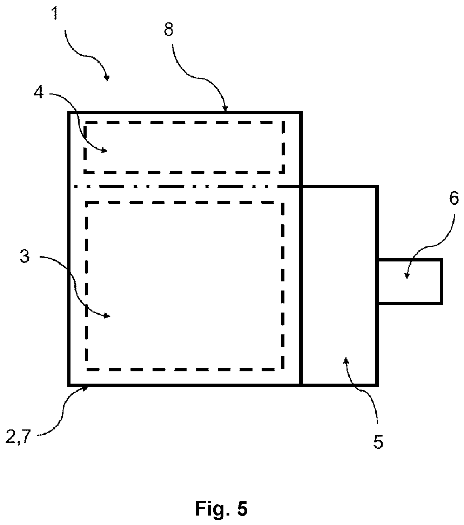

Die Figuren 4 und 5 zeigen schematische Skizzen zweier Ausführungsbeispiele eines erfindungsgemäßen Antriebssystems 1, das zur Ausführung der oberhalb beschrieben Ausführungsform des erfindungsgemäßen Verfahrens zur Bremsenauffrischung eingerichtet ist. Das Antriebssystem 1 umfasst einen elektronisch kommutierten Elektromotor 2, der eine Komponente 3 bestehend aus einem Rotor und einem Stator umfasst. Die Komponente 3 kann dabei beispielsweise eine Welle 6 antreiben. Daneben umfasst das Antriebssystem eine Reibungsbremse 5, die zur Bremsung des Rotors mit dem Rotor gekoppelt ist. Weiter umfasst der elektronisch kommutierte Elektromotor eine integrierte Steuerung 4. Diese integrierte Steuerung 4 ist zur Steuerung und Regelung der Bewegung des Rotors und der Reibungsbremse 5 eingerichtet. Gemäß den in den Figuren 4 und 5 gezeigten Ausführungsbeispielen kann die Reibungsbremse 5 als Haltebremse ausgebildet sein. Weiter kann die Komponente 3 und die integrierte Steuerung 4 in einem gemeinsamen Gehäuse angeordnet sein. Hierbei kann die integrierte Steuerung 4 in einem direkt an dem Elektromotorgehäuse 7 anliegenden und mit diesem verbundenen Gehäuseteil 8 angeordnet sein.

## Patentansprüche

1. Verfahren zur Bremsenauffrischung einer Reibungsbremse eines Antriebssystems mit einem elektronisch kommutierten Elektromotor, der einen Rotor und einen Stator umfasst, wobei die Reibungsbremse zur Bremsung des Rotors mit dem Rotor gekoppelt ist, wobei das Verfahren eine Bremsenauffrischung der Reibungsbremse und ein Testen der Bremsfunktion der Reibungsbremse zur Ermittlung einer momentanen Bremskraft der Reibungsbremse umfasst, wobei die Bremsenauffrischung und das Testen durch eine Steuerung des Antriebssystems gesteuert werden, die zur Steuerung und Regelung der Bewegung des Rotors und der Reibungsbremse eingerichtet ist, **dadurch gekennzeichnet, dass** der elektronisch kommutierte Elektromotor die Steuerung als eine integrierte Steuerung umfasst und die Bremsenauffrischung und das Testen der Bremsfunktion zusammen in einem regelmäßigen Abstand ausgeführt werden, wobei das Testen nach der Bremsenauffrischung durchgeführt wird, um zu verifizieren, dass die momentane Bremskraft nach der Bremsenauffrischung über einer vorgegebenen minimalen Bremskraft liegt.

2. Verfahren gemäß Anspruch 1, wobei die Reibungsbremse eine Haltebremse ist.

3. Verfahren gemäß Anspruch 1 oder 2, wobei der regelmäßige Abstand ein zeitlicher Abstand ist, wobei der zeitliche Abstand vorzugsweise zwischen eins und sechs Wochen, besonders vorzugsweise zwischen drei und fünf, weitervorzugsweise bei vier Wochen, liegt.

4. Verfahren nach einem der Ansprüche 1 bis 3, wobei die vorgegebene minimale Bremskraft bei 40 bis 90%, vorzugsweise bei 50 bis 75%, weitervorzugsweise bei 60%, einer nominalen Bremskraft der Reibungsbremse liegt.

5. Verfahren gemäß einem der Ansprüche 1 bis 4, wobei die Bremsenauffrischung eine Sequenz zur Bremsenauffrischung umfasst, die folgende Schritte umfasst:
a1. Deaktivierung der Reibungsbremse und Beschleunigung des Rotors auf eine vorgegebene Rotationsgeschwindigkeit,
b1. Aktivierung der Reibungsbremse mittels eines Bremsvorgangs unter Aufrechterhaltung der Rotation bei Aufbringung eines ersten vorgegebenen Drehmoments,
c1. Messung einer Bremsreibungsstrecke und Vergleich der Bremsreibungsstrecke mit einer vorgegebenen minimalen Bremsreibungsstrecke,
wobei die Schritte a2. bis c2. solange wiederholt werden, bis eine vorgegebene maximale Anzahl an Durchläufen erreicht ist, bei welchen die Bremsreibungsstrecke grösser als die vorgegebene minimale Bremsreibungsstrecke ist.

6. Verfahren nach Anspruch 5, wobei die vorgegebene Rotationsgeschwindigkeit kleiner oder gleich 1500 U/min, vorzugsweise kleiner oder gleich 500 U/min, ist.

7. Verfahren gemäß Anspruch 5 oder 6, wobei die vorgegebene maximale Anzahl an Durchläufen, bei welchen die Bremsreibungsstrecke grösser der vorgegebenen minimalen Bremsreibungsstrecke ist, bei drei bis zehn, vorzugsweise bei vier bis sechs, weiter vorzugsweise bei fünf, liegt.

8. Verfahren gemäß einem der Ansprüche 1 bis 7, wobei das Testen der Bremsfunktion eine Sequenz zum Testen der Bremsfunktion umfasst, die folgende Schritte umfasst:
a2. Aktivierung der Reibungsbremse,
b2. Aufbringen eines zweiten vorgegebenen Drehmoments auf den Rotor für eine vorgegebene Zeitspanne
c2. Messung einer Rotationstrecke des Rotors und Vergleich der Rotationstrecke mit einer vorgegebenen Rotationsstrecke, die der Rotationsstrecke bei der vorgegebenen minimalen Bremskraft entspricht.

9. Verfahren nach Anspruch 8, wobei die vorgegebene Zeitspanne von 5 bis 15 Sekunden beträgt.

10. Verfahren gemäß Anspruch 8 oder 9, wobei Schritt b1. abgebrochen wird, falls die Rotationsstrecke die vorgegebene Rotationsstrecke während der vorgegebenen Zeitspanne überschreitet.

11. Verfahren gemäß einem der Ansprüche 1 bis 4, wobei die Bremsenauffrischung und das Testen solange wiederholt werden, bis die momentane Bremskraft oberhalb der vorgegebenen Bremskraft bei dem Testen liegt oder eine maximale Anzahl an Wiederholungen der Bremsenauffrischung erreicht wird, wobei die maximale Anzahl an Wiederholungen vorzugsweise bei drei liegt.

12. Antriebssystem mit einer Reibungsbremse und einem elektronisch kommutierten Elektromotor, der einen Rotor, einen Stator und eine integrierte Steuerung umfasst, wobei die Reibungsbremse zur Bremsung des Rotors mit dem Rotor gekoppelt ist, **dadurch gekennzeichnet, dass** das Antriebssystem zur Ausführung des Verfahrens gemäß der Ansprüche 1 bis 11 eingerichtet ist.

13. Verwendung des Antriebssystems gemäß Anspruch 12 als Radantrieb.

14. Verwendung des Antriebssystems gemäß Anspruch 12 oder 13 als Antrieb für Anwendungen mit vertikaler Bewegungsrichtung, insbesondere Hubantriebe für oder entlang einer Vertikalachse.

15. Verwendung des Antriebssystems gemäß Anspruch 12 als Gelenkantrieb in der Robotik.
